# EUROPÄISCHE PATENTSCHRIFT

(11) **EP 0 999 215 B1**
(45) Veröffentlichungstag und Bekanntmachung des Hinweises auf die Patenterteilung: **28.07.2004**
(21) Anmeldenummer: 99120389.4
(22) Anmeldetag: 13.10.1999
(51) Int. Cl.: C07F 7/18, C07F 7/04

(54) **Verfahren zur Herstellung von Alkoxysilanen**
Process for preparing alkoxy silanes
Procédé de préparation d'alkoxysilanes

(30) Priorität: 06.11.1998 DE 19851148; 01.09.1999 DE 19941590
(43) Veröffentlichungstag der Anmeldung: 10.05.2000
(73) Patentinhaber: Degussa AG, 40474 Düsseldorf (DE)
(72) Erfinder: Kropfgans, Frank, J., Dr., 79618 Rheinfelden (DE); Rauleder, Hartwig, Dr., 79618 Rheinfelden (DE); Schork, Reinhold, Dr., 79618 Rheinfelden (DE)

(56) Entgegenhaltungen:
- EP-A- 0 223 210
- EP-A- 0 282 846
- EP-A- 0 532 872
- EP-A- 0 563 883
- EP-A- 0 741 137

## Beschreibung

Die vorliegende Erfindung betrifft ein Verfahren zur Herstellung von Alkoxysilanen, die arm an acidem Chlorid oder im Wesentlichen frei von acidem Chlorid sind.

Es ist bekannt, dass man Alkoxysilane durch Umsetzung der entsprechenden Chlorsilane mit einem Alkohol herstellen kann, zum Beispiel gemäß DE 28 00 017 C2 oder EP 0 107 765 B1.

Im Allgemeinen ist man dabei bemüht, eine möglichst vollständige Veresterung und eine gute Produktausbeute zu erzielen. Unerwünscht ist, dass nicht umgesetzte Anteile an Chlorsilan sowie Chlorwasserstoff als so genannte hydrolysierbare bzw. acide Chlorverbindungen - kurz "acides Chlorid" genannt - im Produkt verbleiben. In der Gruppe der Organoalkoxysilane enthalten in der Regel nur die Aminoalkylalkoxysilane neben acidem Chlorid auch Restmengen an nichthydrolysierbaren Chlorverbindungen, wie Chloralkylalkoxysilan, da solche Verbindungen Ausgangsverbindungen bei der Herstellung der Aminoalkylalkoxysilane sind, vgl. EP 0 741 137 A1.

Im Hinblick auf heutige Anwendungen der Alkoxysilane, wie zum Beispiel als Haftvermittler, zur Hydrophobierung in Bautenschutzmitteln, zur Vernetzung von Kunststoffen, zur Modifizierung von Oberflächen, beispielsweise in Glasfaserschlichten, als Einsatzstoffe für weitere Reaktionsstufen, um nur einige Anwendungen zu nennen, ist es daher erforderlich, Produkte bereitzustellen, die einen möglichst geringen Gehalt an acidem Chlorid aufweisen.

Im nachfolgenden Text wird unter einem chloridfreien Alkoxysilan ein Produkt verstanden, das einen Gehalt an acidem Chlorid von weniger als 10 Gew.ppm aufweist, d. h. im Wesentlichen frei an acidem Chlorid ist. Die Nachweisgrenze für die Bestimmung von acidem Chlorid in Alkoxysilanen liegt heute bei < 1 Gew.-ppm (Bestimmung durch argentometrische Titration in wasserfreier saurer Lösung mit potentiometrischer Endpunkbestimmung - AN-SAA-0411).

EP 0 223 210 A2 lehrt eine Methode zur Reinigung von Alkoxysilanen, die nichthydrolysierbare und hydrolysierbare Chlorverbindungen enthalten, wobei man das Alkoxysilan in Gegenwart von saurem Ton oder einem Schwermetallhalogenid erhitzt, anschließend mit einem Neutralisationsmittel, wie metallischem Natrium, metallischem Kalzium, Alkalihydroxid, Natriumcarbonat, Magnesiumoxid, Alkalialkoholat, Ammoniak, organischen Aminen, Alkylenoxiden oder Orthoester, in Kontakt bringt und das Alkoxysilan von den übrigen Komponenten beispielsweise durch Filtration oder Destillation abtrennt. Auch müssen die hierbei anfallenden Filterrückstände vor ihrer Entsorgung als Sondermüll aufwendig mit Lösemittel silanfrei gewaschen werden oder über ein ebenfalls aufwendiges und kostspieliges Verfahren aufgearbeitet und recycliert werden. Ferner ist das Erhitzen besagter Alkoxysilane in Gegenwart von saurem Ton oder einem Schwermetallhalogenid aufwendig, und es kann zu unerwünschten Nebenreaktionen kommen. So ist bekannt, dass Chloralkylalkoxysilane beim Erhitzen in Gegenwart eines Metallhalogenids, wie Eisenchlorid, Aluminiumchlorid, Kupferchlorid, um nur einige zu nennen, unter Freisetzung von HCl und Bildung von Alkenylalkoxysilanen abgebaut werden. Darüber hinaus sind Produktverfärbungen, Mischesterbildung und Kondensationsreaktionen zu beobachten. Auch genügen Alkoxysilane, die nach einem solchen Verfahren erhalten werden, aufgrund von Spuren des eingesetzten Schwermetallhalogenids im Allgemeinen nicht den hohen Anforderungen in der Lebensmittelindustrie, beispielsweise für Kunststoffverpackungen oder Trinkwasserrohre.

Aus DE-OS 25 21 399 geht ein Verfahren zur Herstellung von Aminoalkylsilanen hervor, wobei einer durch Aminierung eines Chloralkylalkoxysilans erhaltene Reaktionsmischung vor der Aufarbeitung eine der im Gemisch enthaltenen Chloralkylsilan- bzw. Chloridmenge äquivalente Menge an Metallalkoholat zugesetzt wird. Bei diesem Herstellverfahren werden Löse- bzw. Verdünnungsmittel, wie Toluol, Hexan oder Alkohol, eingesetzt.

EP 0 282 846 A2 offenbart ein Verfahren zur Herstellung von Alkoxysilanen mit niedrigem Gehalt an Chlorverbindungen durch stufenweise Veresterung von Chlorsilanen mit Alkoholen in flüssiger Phase unter Abziehen des entstehenden Chlorwasserstoffs, wobei man so erhaltene Alkoxysilane, die noch eine geringe Menge Chlorverbindungen enthalten, mit Metallalkoholat das, bezogen auf den Anteil an Chlorverbindungen, im stöchiometrischen Überschuss zugesetzt wird, bei einer Temperatur im Bereich von 80 bis 200 °C, gegebenenfalls in Gegenwart eines Lösemittels, wie Toluol oder Xylol. umsetzt und das Alkoxysilan beispielsgemäß durch Filtration von den entstandenen Salzen abtrennt. Bei diesem Verfahren sind die langen Reaktionszeiten bei relativ hohen Arbeitstemperaturen wenig vorteilhaft.

Ferner ist gemäß EP 0 486 279 B1 ein den zuvor genannten Verfahren vergleichbares Verfahren zur Entfernung saurer Verunreinigungen aus Alkoxysilanen bekannt, bei dem als Neutralisationsmittel das Metallsalz eines sterisch gehinderten Amins oder ein Alkalialkoholat eines sterisch gehinderten Alkohols bei einer Temperatur bis 80 °C über 1 bis 2 Stunden eingesetzt wird und das neutralisierte Alkoxysilan destilliert. Derartige Neutralisationsmittel sind für den technischen Maßstab nicht in hinreichenden Mengen verfügbar und eine gesonderte, zusätzliche Herstellung des Neutralisationsmitteils wäre aufwendig, kostenintensiv und somit aufgrund wirtschaftlicher Überlegungen auszuschließen.

EP 0 532 872 B1 lehrt ebenfalls ein Verfahren zur Reinigung von Alkoxysilanen, die mit hydrolysierbaren Chloratomen verunreinigt sind, wobei man die Alkoxysilane in einem Druckreaktor, gegebenenfalls in Gegenwart eines im Überschuss zugesetzten Neutralisationsmittels, mit einem Alkohol oberhalb des Siedepunktes des verwendeten Alkohols und dem sich dabei einstellenden Druck umsetzt, das dabei gegebenenfalls anfallende Salz abtrennt und den überschüssigen Alkohol durch Abdestillieren aus dem Produkt entfernt. Als Neutralisationsmittel werden hier u. a. Ammoniak, organische Amine sowie Natriumalkoholate offenbart. Es ist bekannt, dass unter den zuvor genannten Bedingungen insbesondere Chloralkylalkoxysilane mit Ammoniak oder mit organischen Aminen zu Aminoalkylalkoxysilanen oder in Gegenwart von Alkoholen sowie mit Alkoholaten zu Alkyloxyalkylalkoxysilanen reagieren können.

Aus EP 0 563 883 B1 geht ein Verfahren zur Neutralisation saurer Halogenide in Alkoxysilanen hervor, welches als Maßnahmen das Kontaktieren des Alkoxysilans zunächst mit einem Metallalkoholat als Base, die, bezogen auf den Anteil des sauren Halogenids, im stöchiometrischen Überschuss zugesetzt wird, und nachfolgend mit einem sauren Salz, das, bezogen auf den Anteil der restlichen überschüssigen im Alkoxysilan enthaltenen Base, im stöchiometrischen Überschuss eingesetzt wird, vorsieht. Auch hierbei werden die Salze durch Filtration vom Produkt abgetrennt, das gegebenenfalls durch Strippen restlicher Alkoholmengen oder Destillation nachgereinigt werden kann. Darüber hinaus weist EP 0 563 883 B1 auf Probleme hinsichtlich der Farbqualität bei Alkoxysilanen hin, die bei der Aufarbeitung, insbesondere bei der Neutralisation und nachfolgenden Aufarbeitung der Alkoxysilane zu beobachten sind.

Der vorliegenden Erfindung lag die Aufgabe zugrunde, ein weiteres Verfahren bereitzustellen, das es ermöglicht, chloridarme bzw. im Wesentlichen chloridfreie Alkoxysilane in einfacher und wirtschaftlicher Weise herzustellen.

Ein besonderes Anliegen der vorliegenden Erfindung war es, ein Verfahren insbesondere für die Herstellung von Alkoxysilanen bereitzustellen, die ein so genanntes nichthydrolysierbares Halogen in ihrer funktionellen Gruppe tragen, beispielsweise 3-Chlorpropyltrialkoxysilan, oder auch Alkoxysilane, die per se frei von nichthydrolysierbaren Halogenverbindungen sind, wie Tetraethoxysilan, Alkyltri- sowie Dialkyldialkoxysilane bzw. Alkylmethyldialkoxysilane, worin die linearen, verzweigten oder cyclischen Alkylgruppen bevorzugt 1 bis 20 C-Atomen enthalten, sowie für Vinyltrialkoxysilane, Aryltrialkoxysilane, Arylalkyldialkoxysilane, um nur einige zu nennen.

Die gestellte Aufgabe wird erfindungsgemäß entsprechend den Angaben der Patentansprüche gelöst.

Es wurde gefunden, dass man Alkoxysilane, die in hervorragender Weise arm an acidem Chlorid bzw. im Wesentlichen frei von acidem Chlorid sind, in einfacher und wirtschaftlicher Weise herstellen kann, wenn man ein Chlorsilan mit einem Alkohol in wasser- und lösemittelfreier Phase umsetzt und dabei entstehenden Chlorwasserstoff entfernt, vorzugsweise unter vermindertem Druck sowie unter guter Durchmischung, das erhaltene Produktgemisch in den Sumpf der Reindestillation überführt und ein Metallalkoholat bei einer Temperatur von 10 bis 60 °C zur Neutralisation vorliegender acider Chloridverbindungen der Produktmischung zugibt, wobei das Alkoholat, bezogen auf den Gehalt an acidem Chlorid im Produktgemisch, in äquimolaren Mengen oder mit einem stöchiometrischen Überschuss eingesetzt wird, man die Baseenthaltende Produktmischung bei oben genannter Temperatur unter guter Durchmischung behandelt und nachfolgend einer Reindestillation unter vermindertem Druck unterzieht. Vorteilhafterweise kann man die Neutralisationsprodukte aus Base und acidem Chlorid mit dem Destillatrückstand aus der Reindestillationanlage austragen. Das erfindungsgemäße Verfahren kann man diskontinuierlich betreiben, jedoch führt man das vorliegende Verfahren vorzugsweise als kontinuierlichen Prozess durch. Ein weiterer, ökologischer und ökonomischer Vorteil des erfindungsgemäßen Verfahrens ist es, dass man lösemittelfrei arbeitet. Es sei darauf hingewiesen, dass beim vorliegenden Verfahren besagte Alkohole den Lösemitteln nicht zugerechnet werden. Ferner betreibt man den vorliegenden Prozess geeigneterweise in flüssiger Phase unter Schutzgas, vorzugsweise wird als Schutzgas Stickstoff verwendet. Der vorliegende Prozess wird in der Regel bei Drücken betrieben, die geeigneterweise im Bereich von 0,1 bis 1,5 bar abs. liegen.

Erfindungsgemäß hergestellte Produkte - da auch besonders schonend hergestellt - zeichnen sich in hervorragender Weise durch sehr gute Ausbeuten und einen Gehalt von weniger als 5 Gew.-ppm an acidem Chlorid, insbesondere bis hin zur analytischen Nachweisgrenze für acides Chlorid, aus. Darüber hinaus werden beim erfindungsgemäßen Verfahren Produkte erhalten, die sich durch ihre sehr gute Farbqualität und eine ausgezeichnete Reinheit hervorheben.

Gegenstand der vorliegenden Erfindung ist daher ein Verfahren zur Herstellung von Alkoxysilanen, die im Wesentlichen frei von acidem Chlorid sind, wobei das Verfahren die nachfolgende Maßnahmen beinhaltet,
(i) Umsetzung von einem Chlorsilan mit einem Alkohol in wasser- und lösemittelfreier Phase unter Abziehen des dabei entstehenden Chlorwasserstoffs,
(ii) Überführen der erhaltenen Produktmischung in den Sumpf der Reindestillation einschließlich Zugabe eines Metallalkoholats zur Produktmischung bei einer Temperatur im Bereich von 10 bis 60 °C und Behandlung der neutralisierten Produktmischung unter guter Durchmischung, wobei das Alkoholat, bezogen auf den Anteil an acidem Chlorid, in äquimolarer Menge oder mit einem, vorzugsweise geringen, stöchiometrischen Überschuss eingesetzt wird, und
(iii) Reindestillation der behandelten Produktmischung unter vermindertem Druck.

Beim vorliegenden Verfahren kann man das Alkoxysilan durch die Umsetzung eines Chlorsilans, wie zum Beispiel 2-Chlorethyltrichlorsilan, Vinylmethyldichlorsilan, Allyltrichlorsilan, 3-Allyloxypropyltrichlorsilan, Butyltrichlorsilan, Pentyltrichlorsilan, Cyclopentyltrichlorsilan, Cyclopentylmethyldichlorsilan, Phenyltrichlorsilan, Cyclohexyltrichlorsilan, Octylmethyldichlorsilan, Dodecyltrichlorsilan, Benzyltrichlorsilan, Benzylmethyldichlorsilan, 2-Phenylethyltrichlorsilan oder Diphenyldichlorsilan oder besonders bevorzugt Tetrachlorsilan, Methyltrichlorsilan, Dimethyldichlorsilan, Trimethylchlorsilan, Ethyltrichlorsilan, 3-Chlorpropyltrichlorsilan, 3-Chlorpropylmethyldichlorsilan, Cyclohexylmethyldichlorsilan, Vinyltrichlorsilan, Propyltrichlorsilan, Propylmethyldichlorsilan, Isobutyltrichlorsilan, Amyltrichlorsilan, Octyltrichlorsilan, Hexadecyltrichlorsilan sowie Hexadecylmethyldichlorsilan, beispielsweise mit einem einwertigen primären Alkohol mit 1 bis 20 C-Atomen, wie zum Beispiel Methanol, Ethanol, Propanol, Butanol, oder gegebenenfalls mit einem verzweigten Alkohol mit 1 bis 20 C-Atomen, wie i-Propanol, sek.-Butanol, t-Butanol, Amylalkohol oder einem cyclischen Alkohol, wie Cyclopentanol oder Cyclohexylalkohol, oder einem aromatischen Alkohol, wie Benzylalkohol, 2-Phenylethanol, Zimtalkohol, Di- sowie Triphenylmethanol, oder mit einem Monoether von Polyalkylenglykolen, wie Methyl-, Ethyl-, Propyl- oder Butylglykol, oder mit einem Di-, Tri-, Tetramethylenglykolmonoethyl-, Ethyl-, Propyl- oder Butylether, oder mit einem zweiwertigen aliphatischen Alkohol, wie Ethylenglykol, 1,2-Propylenglykol, 1,2-Butylenglykol, oder einem Diol mit 3 bis 12 C-Atomen, wobei die Kohlenstoffkette gradkettig oder verzweigt sein kann, - um nur einige Alkohole zu nennen - unter Freisetzung von Chlorwasserstoff herstellen.

Im Allgemeinen erfolgt die Umsetzung unter Rückflussbedingungen. Man kann die Veresterung aber auch bei einer niedrigeren Temperatur, gegebenenfalls bei vermindertem Druck, durchführen, beispielsweise im Bereich zwischen 50 bis 70 °C sowie über einen Zeitraum von 5 bis 24 Stunden. In einigen Fällen, wie beispielsweise bei Halogenorganoalkoxysilanen, gestaltet sich die Veresterung schwieriger. Jedoch ermöglicht das erfindungsgemäße Verfahren eine weitgehend produktschonende und besonders wirtschaftliche Betriebsweise.

Zur Entfernung des bei der Umsetzung von Chlorsilan und Alkohol entstehenden Chlorwasserstoffs setzt man beim erfindungsgemäßen Verfahren vorzugsweise Alkohol in flüssiger Form fortwährend zu und zieht gleichzeitig einen nicht umgesetzten Anteil des eingesetzten Alkohols als Gasphase über Kopf ab, sodass der eingesetzte Alkohol zusätzlich als "HCl-Stripper" dient. Hierbei kann auch mit vermindertem Druck gearbeitet werden. Durch diese vergleichsweise einfache, aber beim vorliegenden Verfahren sehr wirkungsvolle Verfahrensweise des HCl-Strippens kann so beim erfindungsgemäßen Verfahren eine nahezu vollständige Veresterung erzielt und dadurch die Umsätze in vorteilhafter Weise auf Werte bis 99,9 % gesteigert werden.

Insbesondere setzt man beim erfindungsgemäßen Verfahren als Alkohol Methanol, Ethanol, n-Propanol, i-Propanol, Methylglykol, Ethylglykol oder eine Mischung aus mindestens zwei der zuvor genannten Alkohole ein.

Bevorzugte Alkoxysilane des erfindungsgemäßen Verfahrens genügen der nachfolgenden allgemeinen Formel I oder II, 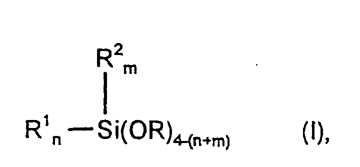 wobei
- R: einen linearen oder verzweigten Alkylrest mit 1 bis 4 C-Atomen oder eine Glykolethereinheit gemäß der Formel -[(CH₂)_{y}-O]_{z}-R³ darstellt, worin
y gleich 2, 4, 6 oder 8, z gleich 1, 2, 3 oder 4 und R³ eine lineare oder verzweigte Alkylgruppe mit 1 bis 8 C-Atomen sind,
- R¹: eine lineare, verzweigte oder cyclische Alkylgruppe mit 1 bis 20 C-Atomen oder eine lineare, verzweigte oder cyclische Chloralkylgruppe mit 1 bis 20 C-Atomen oder eine lineare, verzweigte oder cyclische Alkenylgruppe mit 1 bis 10 C-Atomen darstellt,
- R²: eine lineare oder verzweigte Alkylgruppe mit 1 bis 4 C-Atomen bedeutet,
- n: gleich 0 oder 1 oder 2 ist, m gleich 0 oder 1 und (n+m) gleich 1 oder 2 oder 3 sind,
sowie

Si(OR⁴)₄ (II),

wobei
- R⁴: eine lineare oder verzweigte Alkylgruppe mit 1 bis 8 C-Atomen oder eine Glykolethereinheit gemäß der Formel -[(CH₂)_{y}-O]_{z}-R⁵ darstellt, worin y gleich 2, 4, 6 oder 8, z gleich 1, 2, 3 oder 4 und R⁵ eine lineare oder verzweigte Alkylgruppe mit 1 bis 8 C-Atomen sind.

Nach dem erfindungsgemäßen Verfahren werden nachfolgend aufgeführte Alkoxysilane besonders bevorzugt hergestellt:
Tetramethoxysilan, Tetraethoxysilan, Tetrapropoxysilan, Methylglykolorthosilicat, Ethylglykolorthosilicat, Methyltrimethoxysilan, Methyltriethoxysilan, Dimethyldimethoxysilan, Dimethyldiethoxysilan, Ethyltrimethoxysilan, Ethyltriethoxysilan, 2-Chlorethyltriethoxysilan, Vinyltrimethoxysilan, Vinyltriethoxysilan, Vinylmethyldiethoxysilan, Vinyltris(2-methyloxyethoxy)silan, Phenyltrimethoxysilan, 2-Phenylethyltrimethoxysilan, Diphenyldimethoxysilan, Propyltrimethoxysilan, Propyltriethoxysilan, 3-Chlorpropyltrimethoxysilan, 3-Chlorpropyltriethoxysilan, Propylmethyldimethoxysilan, Propylmethyldiethoxysilan, 3-Chlorpropylmethyldimethoxysilan, 3-Chlorpropylmethyldiethoxysilan, Isobutyltrimethoxysilan, Isobutyltriethoxysilan, Amyltrimethoxysilan, Amyltriethoxysilan, Octyltrimethoxysilan, Octyltriethoxysilan, Cyclohexyltrimethoxysilan, Cyclohexylmethyldimethoxysilan, Hexadecyltrimethoxysilan, Hexadecyltriethoxysilan.

Nach dem erfindungsgemäßen Verfahren kann man aber auch in vorteilhafter Weise Bis(trialkoxysilyl)alkane, Bis(methyldialkoxysilyl)alkane sowie Bis(dimethylalkoxysilyl)alkane herstellen, wobei Methoxy- sowie Ethoxy-Gruppen und lineare Alkane mit 1 bis 16 C-Atomen bevorzugt sind.

Bei einem diskontinuierlich geführten Verfahren kann man gegebenenfalls, - sofern nach der Veresterung größere Mengen an acidem Chlorid in der Produktmischung vorhanden sind, beispielsweise dann, wenn mehr als 1 Gew.-% acides Chlorid, bezogen auf das Alkoxysilan, im Produktmischung enthalten sind, - nach dem Abkühlen der Produktmischung auf eine bevorzugte Temperatur zwischen 10 und 60 °C, besonders vorzugsweise zwischen 20 und 50 °C diese durch Zugabe von Metallalkoholat vorneutralisieren und das dabei entstandene Salz durch Filtration abtrennen.

Es wurde gefunden, dass durch eine Neutralisation, die bei höherer Temperatur durchgeführt wird, Nebenreaktionen auftreten können und die Produktausbeute geschmälert wird. Ferner wurde gefunden, dass in einigen Produkten, die durch eine einmal durchgeführte Neutralisation von acidem Chlorid mit einer Base und anschließendem Abtrennen von entstandenem Salz erhalten werden, nach kurzer Zeit erneut acides Chlorid nachgewiesen werden konnte.

Vor Beginn der Reindestillation erfolgt beim erfindungsgemäßen Verfahren die Behandlung der aus der Veresterung stammenden Produktmischung, wobei man die Zugabe der Base zur Produktmischung vorzugsweise bei einer Temperatur im Bereich zwischen 25 und < 40 °C, besonders vorzugsweise bei 30 bis 38 °C, durchführt.

Insbesondere behandelt man das Metallalkoholat-enthaltende Produktgemisch im Sumpf der Reindestillation vor Beginn der Reindestillation bis zu 4 Stunden, vorzugsweise 10 bis 120 Minuten, besonders vorzugsweise 15 bis 90 Minuten. In der Regel fährt man anschließend die Destillation vor.

Geeigneterweise kann man beim erfindungsgemäßen Verfahren aber auch vor Beginn der Destillation das mit Metallalkoholat behandelte Produktgemisch zur schonenden Neutralisation gegebenenfalls noch vorhandener Spuren an acidem Chlorid mit einer hierzu äquivalenten Menge oder mit einem, vorzugsweise geringen, stochiometrischen Überschuss Ammoniak nachbehandeln.

Hierzu kann man gasförmigen oder flüssigen Ammoniak einsetzen. Vorzugsweise führt man eine solche Nachbehandlung im Sinne einer besonders produktschonenden Feinneutralisation unter guter Durchmischung bei einer Temperatur im Bereich von 30 bis < 40 °C durch.

Bevorzugt behandelt man beim erfindungsgemäßen Verfahren die aus der Veresterung stammende Produktmischung über 10 Minuten bis 4 Stunden. Hierzu sind sowohl die Zeiten für die Behandlung der Produktmischung mit Metallalkoholat als auch gegebenenfalls die Nachbehandlung mit Ammoniak enthalten.

Die zuvor beschriebene Kombination einer Alkoholat/Ammoniak-Behandlung im Rahmen des vorliegenden Verfahrens kann man beispielsweise bei der Herstellung von 3-Chlorpropyltrimethoxysilan, 3-Chlorpropylmethyldimethoxysilan, 3-Chlorpropyltriethoxysilan, 3-Chlorpropylmethyldiethoxysilan anwenden.

Im Allgemeinen überführt man für die Reindestillation das Produktgemisch aus der Veresterung in den Sumpf der Reindestillationsanlage, wobei man z. B. gemäß einer kontinuierlichen Bestimmung des Anteils an acidem Chlorid in der Produktmischung Base in äquimolarer Menge oder im stöchiometrischen Überschuss zuführt. So kann man die Base bereits dem Stoffstrom der Produktmischung zwischen Veresterung und Reindestillationsanlage zuführen. Das Zusammenbringen von Produktmischung und Base erfolgt geeigneterweise unter guter Durchmischung. Eine gute Durchmischung kann beispielsweise auch durch Rühren erzielt werden.

Beim erfindungsgemäßen Verfahren setzt man als Metallalkoholat ein Alkali- oder Erdalkalialkoholat ein, besonders vorzugsweise Natrium- oder Kaliumalkoholat oder Magnesiumalkoholat. Geeigneterweise werden die Alkoholate als alkoholische Lösungen eingesetzt, wobei das Alkoholat vorzugsweise mit einem verwendeten Alkohol korrespondiert.

Die Reindestillation führt man beim erfindungsgemäßen Verfahren im allgemeinen unter vermindertem Druck durch, dabei kann man die Sumpftemperatur den Erfordernissen des jeweiligen Alkoxysilans anpassen, wobei das Reinprodukt geeigneterweise über Kopf der Kolonne entnommen wird. Ein besonderer Vorteil insbesondere im Hinblick auf die Wirtschaftlichkeit des erfindungsmäßen Verfahrens ist es, dass man das Neutralisationsprodukt aus Metallalkoholat, acidem Chlorid und gegebenenfalls Ammoniak bevorzugt mit dem Destillatrückstand der Reindestillation austrägt und man eine zusätzliche Filtration einsparen kann.

Nach dem erfindungsgemäßen Verfahren erhaltene Produkte zeichnen sich im Allgemeinen durch folgende vorteilhaften Eigenschaften aus:
- hohe Produktreinheit (GC > 99 %)
- Gehalt an acidem Chlor üblicherweise < 5 Gew.-ppm, es können Gehalte an aciden Chloriden von < 1 Gew.-ppm erreicht werden
- wasserklare Produkte mit einer sehr geringen Farbzahl (üblicherweise < 5 APHA)
- ausgezeichnete Lagerstabilität und keine Nachfällungen gelöster Salze
- optimiertes und reproduzierbares Hydrolyseverhalten
- breites Einsatzspektrum infolge der minimalen Verunreinigungen.

Die vorliegende Erfindung wird durch die folgenden Beispiele näher erläutert.

### Beispiele

### Beispiel 1A (Vergleichsbeispiel)

### Herstellung von 3-Chlorpropyltrimethoxysilan (CPTMO) gemäß EP 0 282 846 A2

In einem diskontinuierlichen Veresterungsreaktor werden 212 kg (1 kmol) 3-Chlorpropyltrichlorsilan (CPTCS) bei 50 bis 60 °C vorgelegt und insgesamt 110 kg (3,4 kmol) Methanol innerhalb von 5 Stunden zudosiert. Das Methanol wird mittels eines Eintauchrohres unterhalb des Flüssigkeitsspiegels zugegeben. Nach Abschluss der Methanolzugabe wird das Rohprodukt weitere 2 Stunden bei ca. 80 °C am Rückfluss gehalten. Das bei der Reaktion entstehende HCl wird durch einen trockenen N₂-Strom aus dem Reaktionsgemisch ausgetrieben. Anschließend wird der gebildete Rohester mit ca. 200 kg Toluol verdünnt, bei 80 °C mit Natriummethylat-Lösung (ca. 20 Mol-% Überschuss, bezogen auf 1 Mol hydrolysierbares Chlor im Produkt) neutralisiert und auf Raumtemperatur abgekühlt. Gebildetes Natriumchlorid wird abfiltriert und das Filtrat destillativ (Vakuumdestillation) aufgearbeitet.

Nach Abtrennung der Leichtsieder (Methanol, Toluol) erhält man ca. 161 kg (81 %) CPTMO mit einer gaschromatographischen Reinheit von ca. 94 Gew.-% CPTMO und ca. 6 Gew.-% 3-Methoxypropyltrimethoxysilan (MOPTMO) sowie einem Gehalt an hydrolysierbarem Chlorid von ca. 25 ppm. Gebildeter Destillationsrückstand (ca. 40 kg, bestehend aus Siloxanen und Oligomeren) wird verworfen.

### Beispiel 1B (Vergleichsbeispiel)

### Herstellung von CPTMO gemäß EP 0 532 872 B1

Das gemäß Beispiel 1A hergestellte, jedoch nicht neutralisierte und mit Toluol verdünnte CPTMO-Rohprodukt (Gehalt an hydrolysierbarem Chlorid ca. 4,8 Gew.-%) wird gemäß den Angaben im EP 0 532 872 B1 in einem Druckautoklaven mit Methanol und Ammoniak (ca. 10 Mol-% Überschuss, bezogen auf den Gehalt an hydrolysierbarem Chlorid) bei ca. 80 °C eine Stunde lang behandelt. Das abgekühlte Rohprodukt wird mittels Druckfiltration (Seitz-Filter) vom ausgefallenen Ammoniumchlorid befreit (Restgehalt an hydrolysierbarem Chlorid ca. 85 ppm) und mittels fraktionierter Destillation im Vakuum gereinigt. Nach der Destillation erhält man ca. 85 Gew.-% CPTMO mit einer gaschromatographischen Reinheit > 0,5 Gew.-% und einem Anteil an hydrolysierbarem Chlorid von 46 ppm.

### Beispiel 1C

### Herstellung von CPTMO

In einem diskontinuierlichen Veresterungsreaktor werden 212 kg (1 kmol) 3-Chlorpropyltrichlorsilan (CPTCS) bei 50 bis 60 °C vorgelegt und mit insgesamt 110 kg (3,4 kmol) Methanol innerhalb von 5 Stunden zur Reaktion gebracht. Das Methanol wird mittels eines Tauchrohres unterhalb des Flüssigkeitsspiegels zudosiert. Im Zuge der Methanoldosierung wird die Reaktorinnentemperatur durch ständiges Nachheizen so gewählt, dass der Rohester-Ansatz ständig am Rückfluss gehalten wird, jedoch die Innentemperatur 110 bis 115 °C nicht überschreitet. Zur Entfernung des gebildeten HCl wird die gesamte Umsetzung bei leichtem Unterdruck (ca. 100 mbar) und gleichzeitigem Abdestillieren von nicht umgesetztem Methanol (HCl-Strippalkohol) durchgeführt.

Der Stripp-Prozess wird jedoch erst begonnen, wenn ca. 60 % der stöchiometrischen Methanolmenge verbraucht sind. Für das Strippen werden zusätzlich weitere 40 kg Methanol in die siedende Reaktionsmischung zudosiert, die jedoch zusammen mit dem gebildeten HCl sofort wieder aus dem Reaktor abdestilliert und im nächsten Reaktionsansatz wieder eingesetzt werden.

Nach Abschluss der Methanoldosierung wird der saure Ansatz auf Raumtemperatur abgekühlt und mittels Titration mit 0,1 n NaOH der Gehalt an hydrolysierbarem Chlorid bestimmt (Restchloridgehalt ca. 0,5 bis 1,0 ml 0,1 n NaOH). Die Neutralisation kann sowohl direkt im Veresterungsreaktor als auch in der Destillationsblase erfolgen. Üblicherweise wird das Rohprodukt in die Destillationsblase überführt und dort bei Temperaturen von 30 bis 40 °C mit einem geringen stöchiometrischen Überschuss an Natriummethylat-Lösung (30-%ig in Methanol) bzw. Magnesiummethylat-Lösung (gesättigte Lösung in Methanol) versetzt und 60 Minuten unter Rühren neutralisiert. Die zur Feinneutralisation notwendige Menge an Metallalkoholat-Lösung wird so lange zudosiert, bis das Rohprodukt eine Alkalität aufweist, die einen Verbrauch von 1 bis 2 ml 0,1 n HCl bei der Titration entspricht. Bei der ebenfalls möglichen Verwendung von Ammoniak als Neutralisationsmittel wird das Ende der Neutralisation durch einen Verbrauch von ca. 5 ml 0,1 n HCl während der Titration angezeigt. Die Wahl des jeweiligen Neutralisationsmittels wird durch die gewünschte Qualitätskriterien im CPTMO-Reinprodukt vorgegeben. Nach Abschluss der Neutralisation wird das Rohprodukt mittels fraktionierter Destillation im Vakuum gereinigt und gebildetes Salz mit dem Destillationsrückstand (ohne weitere Filtration) ausgetragen.

Man erhält ca. 95 Gew.-% CPTMO mit einer GC-Reinheit > 99 %, MOPTMO-Gehalt < 0,3 % und einem Gehalt an hydrolysierbarem Chlorid < 5 ppm (Einsatz von NaOCH₃-Lösung bzw. NaOCH₃/NH₃-Kombination als Neutralisationsmittel). Beim Einsatz von Magnesiummethylat-Lösung werden 95 Gew.-% mit einer GC-Reinheit > 99,5 %, MOPTMO-Gehalt < 0,1 % und hydrolysierbarem Chlorid < 1 ppm erhalten

### Beispiel 2A (Vergleichsbeispiel)

### Herstellung von Vinyltriethoxysilan (VTEO) gemäß EP 0 282 846 A2

Gemäß der im Vergleichsbeispiel 1A dargestellten Verfahrensweise werden 161,5 kg (1 kmol) Vinyltrichlorsilan (VTC) mit insgesamt 152 kg (3,3 kmol) Ethanol umgesetzt und mit Natriummethylat-Lösung (21-%ig in Ethanol) in 20 Mol-% Überschuss (bezogen auf 1 Mol hydrolysierbares Chlorid im Rohprodukt) neutralisiert und nach Filtration destillativ aufgearbeitet.

Man erhält ca. 127 kg (86 %) VTEO mit einer GC-Reinheit von 97,5 %, Tetraethoxysilangehalt 2 500 ppm, Gehalt an hydrolysierbarem Chlorid von 17 ppm und einer Farbzahl von 10 APHA.

### Beispiel 2B (Vergleichsbeispiel)

### Herstellung von VTEO gemäß EP 0 532 872 B1

Gemäß der im Vergleichsbeispiel 1B dargestellten Verfahrensweise wird gemäß Vergleichsbeispiel 2A hergestelltes, jedoch nicht neutralisiertes VTEO-Rohprodukt (Gehalt an hydrolysierbarem Chlorid ca. 2,1 Gew.-%) in einem Druckautoklaven mit Ethanol und Ammoniak (ca. 10 Mol-% Überschuss an NH₃, bezogen auf Gehalt an hydrolysierbarem Chlorid) bei 100 °C eine Stunde lang behandelt. Nach Filtration und Destillation erhält man ca. 88,5 Gew.-% VTEO mit einer GC-Reinheit von 97,8 %, Tetramethoxysilangehalt < 800 ppm, Gehalt an hydrolysierbarem Chlorid von 64 ppm und einer Farbzahl von 5 APHA.

### Beispiel 2C

### Herstellung von VTEO

Gemäß der in Beispiel 1C dargestellten Verfahrensweise werden 161,5 kg (1,0 kmol) VTC mit insgesamt 152 kg (3,3 kmol) Ethanol unter Anwendung des Strippverfahrens umgesetzt und ohne vorherige Filtration in der Destillationsblase mit Natriummethylat-Lösung (21-%ig in Ethanol) bzw. mit Magnesiumethylat-Lösung (gesättigte Lösung in Ethanol) neutralisiert. Der Endpunkt der Neutralisation wird bei einer Rohprodukt-Alkalität die einem Verbrauch von 1 bis 2 ml 0,1 n HCl entspricht, erreicht. Nach destillativer Reinigung erhält man ca. 92 Gew.-% VTEO mit einer GC-Reinheit > 99 %, Tetraethoxysilangehalt < 800 ppm, hydrolysierbares Chlorid < 1 ppm und einer Farbzahl < 5 APHA. Beim Einsatz von Magnesiumethylat-Lösung als Neutralisationsmittel werden 94 Gew.-% VTEO mit einer GC-Reinheit > 99 %, Tetraethoxysilangehalt < 300 ppm, einer Farbzahl < 5 APHA und hydrolysierbarem Chloridgehalt < 1 ppm erhalten.

### Beispiel 2D

### Kontinuierliche Herstellung von VTEO

In einer kontinuierlichen Veresterungsanlage, bestehend aus Reaktor- und Vorlaufkolonne werden gleichzeitig ca. 100 kg/h Vinyltrichlorsilan und 80 bis 90 kg/h Ethanol in die Reaktorkolonne bei ca. 60 °C und Normaldruck eindosiert und dort zur Reaktion gebracht. Gebildeter Chlorwasserstoff wird über den Kolonnenkopf abgezogen, das stark saure Silanester-Rohprodukt (Acidität ca. 5 000 ppm) verlässt die Reaktorkolonne im Sumpfteil und wird mittels Förderpumpe in eine zweite Veresterungskolonne (Vorlaufkolonne) eindosiert. In der Vorlaufkolonne wird der Anteil noch nicht vollständig umgesetzter Chlorsilane (ca. 5 000 ppm) durch zusätzliche Zugabe einer kleinen Menge Ethanol (ca. 10 bis 20 kg) nachverestert und im Rohprodukt noch gelöste HCl bei Siedetemperatur des Rohprodukts (ca. 80 bis 90 °C) über den Kopf der Vorlaufkolonne abgetrieben. Überschüssiges Ethanol wird ebenfalls über den Kopf der Vorlaufkolonne ausgeschleust und erneut in die Reaktorkolonne eindosiert. Das desorbierte Rohprodukt verlässt die Vorlaufkolonne über dem Sumpfteil und wird nach Abkühlung über mehrere Wärmetauscher in einen Rohproduktbehälter abgepumpt. Der so hergestellte Rohester zeichnet sich durch eine hohe GC-Reinheit und geringe Restacidität aus (Acidität maximal 200 ppm, VTEO-Gehalt > 98 %, Siloxangehalt < 1 %, Ethanolgehalt < 1 %).

Das VTEO-Rohprodukt kann sowohl mittels kontinuierlicher als auch diskontinuierlicher Destillation unter Zusatz von Natrium- oder Magnesiumethylat-Lösung (als Neutralisationsmittel, Neutralisationsendpunkt bei Verbrauch von 1,5 ml 0,1 n HCl) gereinigt werden. Gebildetes Natrium- bzw. Magnesiumchlorid wird mit dem Destillationssumpf ausgetragen (vgl. dazu Beispiel 1C).

Man erhält eine Ausbeute von ca. 96 Gew.-% VTEO mit einer GC-Reinheit > 99,3 %, Tetraethoxysilangehalt < 200 ppm, einer Farbzahl < 5 APHA und hydrolysierbarem Chloridgehalt < 1 ppm.

### Beispiel 3A (Vergleichsbeispiel)

### Herstellung von Hexadecyltrimethoxysilan gemäß EP 0 282 846 A2

Gemäß der im Vergleichsbeispiel 1A dargestellten Verfahrensweise werden 360 kg (1 kmol) Hexadecyltrichlorsilan mit insgesamt 110 kg (3.4 kmol) Methanol umgesetzt und mit Natriummethylat-Lösung (30-%ig in Methanol) in 20 Mol-% Überschuss (bzw. auf 1 Mol hydrolysierbaren Chlorid im Rohprodukt) neutralisiert und nach Filtration destillativ aufgearbeitet. Man erhält ca. 280 kg (81 %) Hexadecyltrimethoxysilan mit einer GC-Reinheit von 98,5 % (Isomerengemisch), Farbzahl 10 APHA und hydrolysierbarem Chlorid von 12 ppm.

### Beispiel 3B (Vergleichsbeispiel)

### Herstellung von Hexadecyltrimethoxysilan gemäß EP 0 532 872 B1

Gemäß der im Vergleichsbeispiel 1B dargestellten Verfahrensweise wird gemäß Vergleichsbeispiel 3A hergestelltes, jedoch nicht neutralisiertes Rohprodukt (Gehalt an hydrolysierbarem Chlorid ca. 1,8 Gew.-%) in einem Druckautoklaven mit Methanol und Ammoniak (ca. 10 Mol-% Überschuss an NH₃, bezogen auf den Gehalt an hydrolysierbarem Chlorid) bei ca. 100 °C eine Stunde lang behandelt. Nach Filtration und Destillation erhält man ca. 86 % Hexadecyltrimethoxysilan mit einer GC-Reinheit von 98,4 % (Isomerengemisch), Farbzahl < 10 APHA und hydrolysierbarem Chlorid von 47 ppm.

### Beispiel 3C

### Herstellung von Hexadecyltrimethoxysilan

Gemäß der in Beispiel 1C dargestellten Verfahrensweise werden 360 kg (1 kmol) Hexadecyltrichlorsilan mit insgesamt 100 kg (1 kmol) Methanol unter Anwendung des Strippverfahrens während einer Dosierzeit von 12 Stunden umgesetzt und ohne vorherige Filtration in der Destillationsblase mit Natriummethylat-Lösung (30-%ig in Methanol) bzw. mit Magnesiummethylat-Lösung (gesättigte Lösung in Methanol) neutralisiert. Der Endpunkt der Neutralisation wird bei einer Rohproduktalkalität, die einem Verbrauch von 2 ml 0,1 n HCl entspricht, erreicht.

Nach destillativer Reinigung im Vakuum erhält man ca. 95,3 Gew.-% Hexadecyltrimethoxysilan mit einer GC-Reinheit > 99 % (Isomerengemisch), Farbzahl < 5 APHA und hydrolysierbarem Chlorid < 2 ppm. Beim Einsatz von Magnesiummethylat-Lösung werden 96 Gew.-% Hexadecyltrimethoxysilan in ansonst gleiche Endproduktqualität erhalten.

### Beispiel 4A (Vergleichsbeispiel)

### Herstellung von Tetra(2-methoxyethoxy)silan (CM) gemäß EP 0 282 846 A2

Gemäß der im Vergleichsbeispiel 1A dargestellten Verfahrensweise werden 170 kg (1 kmol) Tetrachlorsilan mit insgesamt 335 kg (4 kmol) Methylglykol umgesetzt und mit Natriummethylat-Lösung (30-%ig in Methanol) in 20 Mol-% Überschuss (bezogen auf 1 Mol hydrolysierbares Chlorid im Rohprodukt) neutralisiert und durch Filtration mit anschließender Destillation aufgearbeitet.

Man erhält ca. 284 kg (86,5 %) Tetra(2-methoxyethoxy)silan mit einer GC-Reinheit von 97,3 %, Gehalt an 2-Chlorethoxy-tris(2-methoxyethoxy)silan 1,9 %, Farbzahl 15 APHA und hydrolysierbarem Chlorid von 27 ppm.

### Beispiel 4B (Vergleichsbeispiel)

### Herstellung von Tetra(2-methoxyethoxy)silan gemäß EP 0 532 872 B1

Gemäß der in Vergleichsbeispiel 1B dargestellten Verfahrensweise wird gemäß Vergleichsbeispiel 4A hergestelltes, jedoch nicht neutralisiertes CM-Rohprodukt (Gehalt an hydrolysierbarem Chlorid ca. 2,1 Gew.-%) in einem Druckautoklaven mit Methylglykol und Ammoniak (ca. 10 Mol-% Überschuss an NH₃, bezogen auf den Gehalt an hydrolysierbarem Chlorid) bei ca. 80 °C eine Stunde lang behandelt. Nach Filtration und Destillation erhält man ca. 88 Gew.-% Tetra(2-methoxyethoxy)silan mit einer GC-Reinheit von 97,8 %, Gehalt an 2-Chlorethoxy-tris(2-methoxyethoxy)silan 0,85 %, Farbzahl 10 APHA und hydrolysierbarem Chlorid von 61 ppm.

### Beispiel 4C

### Herstellung von Tetra(2-methoxyethoxy)silan (CM)

Gemäß der im Beispiel 1C dargestellten Verfahrensweise werden 170 kg (1 kmol) Tetrachlorsilan mit insgesamt 335 kg (4,4 kmol) Methylglykol unter Anwendung des Strippverfahrens umgesetzt und ohne vorherige Filtration in der Destillationsblase mit Natriummethylat-Lösung (30-%ig in Methanol) bzw. mit Magnesiummethylat-Lösung (gesättigte Lösung in Methanol) neutralisiert. Der Neutralisationsendpunkt wird bei einer Rohprodukt-Alkalität, die einem Verbrauch von 1 bis 2 ml 0,1 n HCl entspricht, erreicht.

Nach destillativer Aufarbeitung im Vakuum erhält man ca. 92 Gew.-% Tetra(2-methoxyethoxy)silan mit einer GC-Reinheit > 99,5 %, Farbzahl 5 APHA. Gehalt an 2-Chlorethoxy-tris(2-methoxyethoxy)silan < 0,4 % und hydrolysierbarem Chlorid < 5 ppm. Beim Einsatz von Magnesiummethylat-Lösung werden ca. 93,5 Gew.-% Reinprodukt (CM) mit einer GC-Reinheit > 99,7 %, Farbzahl < 5 APHA, Gehalt an 2-Chlorethoxy-tris(2-methoxyethoxy)silan < 0,4 % und hydrolysierbarem Chlorid < 5 ppm erhalten.

### Beispiel 4D

### Kontinuierliche Herstellung von Tetra(2-methoxyethoxy)silan (CM)

In einer kontinuierlichen Veresterungsanlage, bestehend aus Vorlauf- und Reaktorkolonne werden gleichzeitig ca. 60 kg/h Tetrachlorsilan und 120 bis 130 kg/h Methylglykol in die Reaktorkolonne bei ca. 55 °C und Normaldruck eindosiert und dort zur Reaktion gebracht. Gebildeter Chlorwasserstoff wird über den Kolonnenkopf abgezogen, das stark saure Silanester-Rohprodukt verläßt die Reaktorkolonne im Sumpfteil und wird mittels einer geeigneten Förderpumpe in eine zweite Veresterungskolonne (Vorlaufkolonne) eindosiert. In der Vorlaufkolonne wird der Anteil an noch nicht vollständig umgesetztem Chlorsilan (ca. 500 ppm) durch zusätzliche Aufgabe einer weiteren Menge Methylglykol (≈ 20 kg/h) nachverestert und im Rohprodukt noch gelöste HCl bei Siedetemperatur des Rohprodukts (120 bis 145 °C) über Kopf der Kolonne abgetrieben. Überschüssiges Methylglykol wird über den Kopf der Vorlaufkolonne ausgeschleust und erneut in die Reaktorkolonne eindosiert.

Das desorbierte Rohprodukt verlässt die Vorlaufkolonne über den Sumpfteil und wird nach Abkühlung über mehrere Wärmetauscher in einen Rohproduktbehälter abgepumpt. Der so hergestellte Rohester zeichnet sich durch eine hohe Reinheit und geringe Restacidität aus (Acidität maximal 50 ppm, Siloxangehalt < 3 %, Gehalt Methylglykol < 5 %, Gehalt CM > 92 %).

Das Silanester-Rohprodukt kann sowohl mittels kontinuierlicher als auch diskontinuierlicher Destillation unter Einsatz von Natrium- oder Magnesiummethylat-Lösung (als Neutralisationsmittel, Neutralisationsendpunkt bei 2 ml 0,1 n HCl-Lösung) gereinigt werden. Gebildetes Natrium- bzw. Magnesiumchlorid wird mit dem Destillationssumpf ausgetragen (vgl. dazu Beispiel 1C).

Man erhält eine Ausbeute von 93 bis 95 Gew.-% Tetra(2-methoxyethoxy)silan mit einer GC-Reinheit > 99,5 %, Farbzahl 5 APHA, Gehalt an 2-Chlorethoxytris(2-methoxyethoxy)silan< 0,1 % und hydrolysierbarem Chlorid < 5 ppm.

## Patentansprüche

1. Verfahren zur Herstellung von Alkoxysilanen, die arm an acidem Chlorid oder im Wesentlichen frei von acidem Chlorid sind, wobei das Verfahren die nachfolgenden Maßnahmen beinhaltet,
(i) Umsetzung von einem Chlorsilan mit einem Alkohol in wasser- und lösemittelfreier Phase unter Entfernen des dabei entstehenden Chlorwasserstoffs,
(ii) Überführen der erhaltenen Produktmischung in den Sumpf der Reindestillation einschließlich Zugabe eines Metallalkoholats zur Produktmischung bei einer Temperatur im Bereich von 10 bis 60 °C und Behandlung der neutralisierten Produktmischung unter guter Durchmischung, wobei das Alkoholat, bezogen auf den Anteil an acidem Chlorid, in äquimolaren Mengen oder mit einem stöchiometrischen Überschuss eingesetzt wird, und
(iii) Reindestillation der behandelten Produktmischung unter vermindertem Druck.

2. Verfahren nach Anspruch 1,
**dadurch gekennzeichnet,**
**dass** man bei der Umsetzung von Chlorsilan und Alkohol zur Entfernung des dabei entstehenden Chlorwasserstoffs fortwährend Alkohol in flüssiger Form zusetzt und einen überschüssigen Anteil des eingesetzten Alkohols über Kopf abzieht.

3. Verfahren nach Anspruch 1 oder 2,
**dadurch gekennzeichnet,**
**dass** man die Zugabe des Metallalkoholats zu der Produktmischung im Sumpf der Reindestillation und die sich anschließende Behandlung unter guter Durchmischung bei einer Temperatur von 25 bis < 40 °C durchführt.

4. Verfahren nach mindestens einem der Ansprüche 1 bis 3,
**dadurch gekennzeichnet,**
**dass** man das Produktgemisch im Sumpf der Reindestillationsanlage vor Beginn der Reindestillation bis zu 4 Stunden behandelt und anschließend die Destillation vorfährt.

5. Verfahren nach mindestens einem der Ansprüche 1 bis 4,
**dadurch gekennzeichnet,**
**dass** man vor Beginn der Destillation das mit Metallalkoholat behandelte Produktgemisch zur Neutralisation gegebenenfalls noch vorhandener Spuren an acidem Chlorid mit einer hierzu äquivalenten Menge oder mit einem stöchiometrischen Überschuss Ammoniak nachbehandelt.

6. Verfahren nach mindestens einem der Ansprüche 1 bis 5,
**dadurch gekennzeichnet,**
**dass** man die Neutralisationsprodukte aus Metallalkoholat, acidem Chlorid und gegebenenfalls Ammoniak mit dem Destillatrückstand der Reindestillation austrägt.

7. Verfahren nach mindestens einem der Ansprüche 1 bis 6,
**dadurch gekennzeichnet,**
**dass** man als Alkohol Methanol, Ethanol, i-Propanol, n-Propanol, Methylglykol oder Ethylglykol einsetzt.

8. Verfahren nach mindestens einem der Ansprüche 1 bis 7,
**dadurch gekennzeichnet,**
**dass** das Metallalkoholat als alkoholische Lösung eingesetzt wird.

9. Verfahren nach mindestens einem der Ansprüche 1 bis 8,
**dadurch gekennzeichnet,**
**dass** man ein Metallalkoholat einsetzt, wobei das Alkoholat mit einem verwendeten Alkohol korrespondiert.

10. Verfahren nach mindestens einem der Ansprüche 1 bis 9,
**dadurch gekennzeichnet,**
**dass** man als Metallalkoholat ein Alkalialkoholat oder ein Erdalkalialkoholat einsetzt.

11. Verfahren nach Anspruch 10,
**dadurch gekennzeichnet,**
**dass** man als Metallalkoholat Natrium- oder Kaliumalkoholat oder Magnesiumalkoholat einsetzt.

12. Verfahren nach mindestens einem der Ansprüche 1 bis 10,
**dadurch gekennzeichnet,**
**dass** man das Verfahren unter Schutzgas betreibt.

13. Verfahren nach mindestens einem der Ansprüche 1 bis 12,
**dadurch gekennzeichnet,**
**dass** man das Verfahren als kontinuierlichen Prozess durchführt.

14. Verfahren nach mindestens einem der Ansprüche 1 bis 13,
**dadurch gekennzeichnet,**
**dass** das Alkoxysilan der nachfolgenden allgemeinen Formel I oder II genügt, 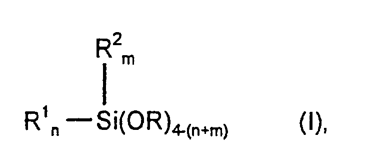 wobei
R einen linearen oder verzweigten Alkylrest mit 1 bis 4 C-Atomen oder eine Glykolethereinheit gemäß der Formel -[(CH₂)_{y}-O]_{z}-R³ darstellt, worin
y gleich 2, 4, 6 oder 8, z gleich 1, 2, 3 oder 4 und R³ eine lineare oder verzweigte Alkylgruppe mit 1 bis 8 C-Atomen sind,
R¹ eine lineare, verzweigte oder cyclische Alkylgruppe mit 1 bis 20 C-Atomen oder eine lineare, verzweigte oder cyclische Chloralkylgruppe mit 1 bis 20 C-Atomen oder eine lineare, verzweigte oder cyclische Alkenylgruppe mit 1 bis 10 C-Atomen darstellt,
R² eine lineare oder verzweigte Alkylgruppe mit 1 bis 4 C-Atomen bedeutet,
n gleich 0 oder 1 oder 2 ist, m gleich 0 oder 1 und (n+m) gleich 1 oder 2 oder 3 sind,
sowie
Si(OR⁴)₄ (II),
wobei
R⁴ eine lineare oder verzweigte Alkylgruppe mit 1 bis 8 C-Atomen oder eine Glykolethereinheit gemäß der Formel -[(CH₂)_{y}-O]_{z}-R⁵ darstellt, worin y gleich 2, 4, 6 oder 8, z gleich 1, 2, 3 oder 4 und R⁵ eine lineare oder verzweigte Alkylgruppe mit 1 bis 8 C-Atomen sind.

## Claims

1. A process for preparing alkoxysilanes which are low in acidic chloride or essentially free from acidic chloride, comprising the following measures:
(i) reacting a chlorosilane with an alcohol in a water-free and solvent-free phase with removal of the resultant hydrogen chloride,
(ii) transferring the resultant product mixture into the liquid phase of a purificative distillation, including the addition of a metal alcoholate to the product mixture at a temperature in the range from 10 to 60°C, and treating the neutralized product mixture with thorough mixing, said alcoholate being employed in an equimolar amount or with a stoichiometric excess based on the proportion of acidic chloride, and
(iii) subjecting the treated product mixture to purificative distillation under reduced pressure.

2. A process according to claim 1, **characterized in that**, during the reaction of chlorosilane and alcohol, alcohol in liquid form is added continuously in order to remove the hydrogen chloride formed in said reaction, and an excess fraction of the alcohol employed is taken off from the top.

3. A process according to claim 1 or 2, **characterized in that** the addition of the metal alcoholate to the product mixture in the liquid phase of the purificative distillation and the subsequent treatment are carried out with thorough mixing at a temperature of from 25 to < 40°C.

4. A process according to at least one of claims 1 to 3, **characterized in that** the product mixture is treated for up to 4 hours in the liquid phase of the purificative distillation unit prior to beginning the purificative distillation and then the distillation is carried out next.

5. A process according to at least one of claims 1 to 4, **characterized in that** prior to the beginning of the distillation the metal alcoholate-treated product mixture is subjected, for the purpose of neutralizing any traces of acidic chloride, to aftertreatment with an equivalent amount or with a stoichiometric excess of ammonia.

6. A process according to at least one of claims 1 to 5, **characterized in that** the neutralization products of metal alcoholate, acidic chloride and, if appropriate, ammonia are discharged together with the distillate residue from the purificative distillation.

7. A process according to at least one of claims 1 to 6, **characterized in that** the alcohol employed is methanol, ethanol, isopropanol, n-propanol, methylglycol or ethylglycol.

8. A process according to at least one of claims 1 to 7, **characterized in that** the metal alcoholate is employed in the form of an alcoholic solution.

9. A process according to at least one of claims 1 to 8, **characterized in that** a metal alcoholate is employed where the alcoholate corresponds to an alcohol that is used.

10. A process according to at least one of claims 1 to 9, **characterized in that** the metal alcoholate employed is an alkali metal alcoholate or an alkaline earth metal alcoholate.

11. A process according to claim 10, **characterized in that** the metal alcoholate employed is sodium alcoholate or potassium alcoholate or magnesium alcoholate.

12. A process according to at least one of claims 1 to 10, **characterized in that** it is operated under an inert gas.

13. A process according to at least one of claims 1 to 12, **characterized in that** it is carried out as a continuous process.

14. A process according to at least one of claims 1 to 13, **characterized in that** the alkoxysilane is of the following general formula I or II 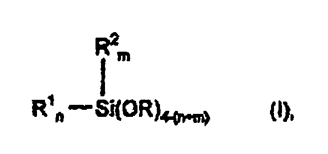 where
R is a linear or branched alkyl radical having 1 to 4 carbon atoms or a glycol ether unit of the formula -[(CH₂)_{y}-O]_{z}-R³,
in which
y is 2, 4, 6 or 8, z is 1, 2, 3 or 4 and R³ is a linear or branched alkyl group having 1 to 8 carbon atoms,
R¹ is a linear, branched or cyclic alkyl group having 1 to 20 carbon atoms or a linear, branched or cyclic chloroalkyl group having 1 to 20 carbon atoms or a linear, branched or cyclic alkenyl group having 1 to 10 carbon atoms,
R² is a linear or branched alkyl group having 1 to 4 carbon atoms, and
n is 0 or 1 or 2, m is 0 or 1, and (n+m) is 1 or 2 or 3,
and
Si(OR⁴)₄ (II),
where
R⁴ is a linear or branched alkyl group having 1 to 8 carbon atoms or a glycol ether unit of the formula -[(CH₂)_{y}-O]_{z}-R⁵,
in which
y is 2, 4, 6 or 8, z is 1, 2, 3 or 4 and R⁵ is a linear or branched alkyl group having 1 to 8 carbon atoms.

## Revendications

1. Procédé de préparation d'alcoxysilanes pauvres en chlorure acide ou essentiellement exempts de chlorure acide, lequel fait intervenir les opérations suivantes :
(i) décomposition d'un chlorosilane à l'aide d'un alcool dans une phase anhydre et sans solvant, avec élimination du gaz chlorhydrique ainsi produit,
(ii) transfert du mélange de produits ainsi obtenu vers le bas de la colonne de distillation de purification, avec addition d'un alcoolate de métal audit mélange de produits à une température comprise entre 10 et 60°C et traitement du mélange de produits neutralisé en présence d'une bonne homogénéisation, l'alcoolate étant mis en oeuvre (par rapport à la proportion de chlorure acide) en quantités équimolaires ou avec un excédent stoechiométrique, et
(iii) distillation de purification du mélange de produits traité sous pression réduite.

2. Procédé selon la revendication 1,
**caractérisé en ce qu'**
au cours de la décomposition du chlorosilane et de l'alcool, afin d'éliminer le gaz chlorhydrique ainsi produit, on ajoute continuellement de l'alcool sous forme liquide, et on retire une partie excédentaire de l'alcool mis en oeuvre en la faisant passer par la tête de distillation.

3. Procédé selon la revendication 1 ou 2,
**caractérisé en ce qu'**
on effectue l'addition de l'alcoolat de métal au mélange de produits dans le bas de la colonne de distillation de purification, ainsi que le traitement consécutif, en présence d'une bonne homogénéisation à une température comprise entre 25°C et moins de 40°C.

4. Procédé selon l'une des revendications 1 à 3,
**caractérisé en ce qu'**
on traite le mélange de produits, dans le bas de la colonne de l'installation de distillation de purification, avant le début de la distillation de purification, pendant une durée allant jusqu'à 4 heures, et on procède ensuite à la distillation.

5. Procédé selon l'une des revendications 1 à 4,
**caractérisé en ce qu'**
avant le début de la distillation, on retraite le mélange de produits, traité à l'aide de l'alcoolat de métal, afin de neutraliser les traces de chlorure acide éventuellement encore présentes, en mettant en oeuvre une quantité équivalente (par rapport à ces traces) ou encore un excédent stoechiométrique d'ammoniac.

6. Procédé selon l'une des revendications 1 à 5,
**caractérisé en ce qu'**
on extrait les produits de neutralisation, provenant de l'alcoolat de métal, du chlorure acide et le cas échéant de l'ammoniac, avec le résidu de la distillation de purification.

7. Procédé selon l'une des revendications 1 à 6,
**caractérisé en ce que**
comme alcool, on met en oeuvre le méthanol, l'éthanol, le i-propanol, le n- propanol, le méthylglycol ou l'éthylglycol.

8. Procédé selon l'une des revendications 1 à 7,
**caractérisé en ce que**
l'alcoolate de métal est mis en oeuvre sous forme de solution alcoolique.

9. Procédé selon l'une des revendications 1 à 8,
**caractérisé en ce qu'**
on met en oeuvre un alcoolate de métal, cet alcoolate correspondant à un alcool utilisé.

10. Procédé selon l'une des revendications 1 à 9,
**caractérisé en ce que**
comme alcoolate de métal, on met en oeuvre un alcoolate de métal alcalin ou alcalino-terreux.

11. Procédé selon la revendication 10,
**caractérisé en ce que**
comme alcoolate de métal, on met en oeuvre un alcoolate de sodium, de potassium ou de magnésium.

12. Procédé selon l'une des revendications 1 à 10,
**caractérisé en ce qu'**
on exécute le procédé en présence d'un gaz protecteur.

13. Procédé selon l'une des revendications 1 à 12,
**caractérisé en ce qu'**
on exécute le procédé sous la forme d'un processus continu.

14. Procédé selon l'une des revendications 1 à 13,
**caractérisé en ce que**
l'alcoxysilane répond à la formule générale I ou II ci-dessous 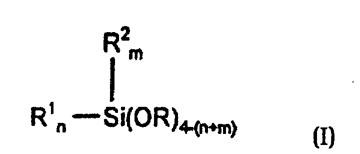 où :
R représente un reste alkyle linéaire ou ramifié, comportant de 1 à 4 atomes de carbone, ou encore une unité de glycoléther selon la formule -[(CH₂)_{y}-O]_{z}-R³, dans laquelle
y est égal à 2, 4, 6 ou 8, alors que z est égal à 1, 2, 3 ou 4, et R³ représente un groupe alkyle linéaire ou ramifié comportant de 1 à 8 atomes de carbone,
R¹ représente un groupe alkyle linéaire, ramifié ou cyclique comportant de 1 à 20 atomes de carbone, ou encore un groupe chloralkyle linéaire, ramifié ou cyclique comportant de 1 à 20 atomes de carbone, ou bien un groupe alcényle linéaire, ramifié ou cyclique comportant de 1 à 10 atomes de carbone,
R² représente un groupe alkyle linéaire ou ramifié comportant de 1 à 4 atomes de carbone,
n est égal à 0 ou 1 ou 2, alors que m est égal à 0 ou 1 et (n+m) est égal à 1, 2 ou 3,
ainsi que
Si(OR⁴)₄ (II)
où
R⁴ représente un groupe alkyle linéaire ou ramifié comportant de 1 à 8 atomes de carbone, ou encore une unité de glycoléther selon la formule -[(CH₂)_{y}-O]_{z}-R⁵, dans laquelle y est égal à 2, 4, 6 ou 8, alors que z est égal à 1, 2, 3 ou 4 et R⁵ représente un groupe alkyle linéaire ou ramifié comportant de 1 à 8 atomes de carbone.
